# EUROPEAN PATENT SPECIFICATION

(11) **EP 1 656 861 B1**
(45) Date of publication and mention of the grant of the patent: **19.05.2010**
(21) Application number: 05024975.4
(22) Date of filing: 15.11.2005
(51) Int. Cl.: A47J 31/06

(54) **A coffee filter**
Kaffeefilter
Filtre de café

(30) Priority: 16.11.2004 CN 200420057524 U
(43) Date of publication of application: 17.05.2006
(73) Proprietor: FATIA INDUSTRIAL COMPANY LIMITED, Tsuen Wan, New Territories (HK)
(72) Inventor: Fung, Shiu Po, Tsuen Wan New Territories (HK)
(74) Representative: Chaillot, Geneviève

(56) References cited:
- US-A- 5 753 297
- US-A1- 2004 112 223

## Description

### Background of the invention

The present invention generally relates to a coffee filter.

Coffee filters fitted to the steam outlet of a coffee roaster are used to make delicious, foamy espresso by virtue of steam pressure. The coffee filter primarily includes a valve needle that is sleeved with a return spring, which moves up and down along the valve opening according to the change of coffee juice pressure, and by this way a gap is formed for the outflow of coffee. Good coffee cannot be made if the gap is too large. On the other hand, the coffee espresso often contains fine particles. A small gap will result in blockage between the valve needle and the valve opening, which will result in dangerous excessive pressure. Therefore, cleaning work is often needed and is really bothersome.

A coffee filter which can be regarded as useful to understand the invention is described in US 5753297 A.

In present technology, the valve needle is often fitted with a cover board of large area. It is placed above the valve opening; therefore, the valve needle can be moved with less pressure. However, with this structure cleaning is very difficult, and the coffee flows too slowly to carry away the steaming at normal working pressure. Once the pressure is too large, the cover board of the valve needle will seal the valve opening. As a result, the filter has to be disassembled from the coffee roaster, which is then cleaned thoroughly after the valve needle has been taken out. The latter is truly a bothersome operation. Furthermore, if there is still residual liquid or gas inside the valve, and the pressure is not high enough to open the valve needle by the time the filter is removed from the coffee machine, then there is a potential burn hazard.

### Summary of the invention

To solve the above problems, the present invention provides a coffee filter as defined in claim 1, which not only makes high quality coffee, but also is easy and convenient to clean with a high degree of safety.

Briefly stated, the coffee filter in a preferred form includes a filter bowl, a handle and a valve needle. The valve needle is fitted below the valve opening of the filter bowl. The valve needle is sleeved with a return spring that exerts an upward force to the valve needle, so that its top engages against the valve opening. A turnable drive rod that is hinged onto the handle exerts downward force to the valve needle, so that its top disengages from the valve opening.

The application end of the drive rod is provided with a seizing notch that can seize the valve needle. The notch opening has an angular structure.

The valve needle has a flange, and its position is in the travel path of the seizing notch of the drive rod.

The present invention is efficient to use. If the pressure inside the filter bowl is sufficient, the top end of the valve needle is forced to move down to form a gap between the valve needle and the valve opening. Coffee foam is produced when coffee juice goes through the valve opening and suddenly releases. After coffee is served out, when holding the handle and taking off the filter, the drive rod is grasped naturally together with the handle. As a result, the seizing notch of the drive rod seizes the valve needle and forces it to move downward and disengage from the valve opening, which discharges accumulated residual vapor. This ensures the user safety. When the drive rod and the handle are held tightly, the largest gap is reached between the valve needle and the valve opening. At this point the filter is flushed. The dregs can be completely removed. The handling is convenient and easy with a greatly increased working efficiency.

### Brief description of the drawings

Figure 1 is a disassembled exploded view of structural components of a coffee filter in accordance with the present invention.
Figure 2 is an assembly view of the coffee filter of Figure 1.
Figure 3 is a sectional view along the A-A of Figure 2.
Figure 4 is a sectional view along the line B-B of Figure 3.

### Detailed description of the preferred embodiments

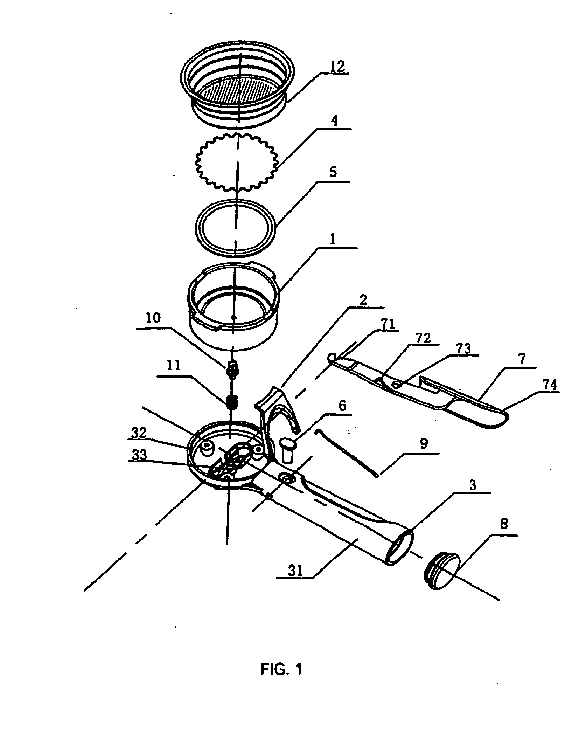

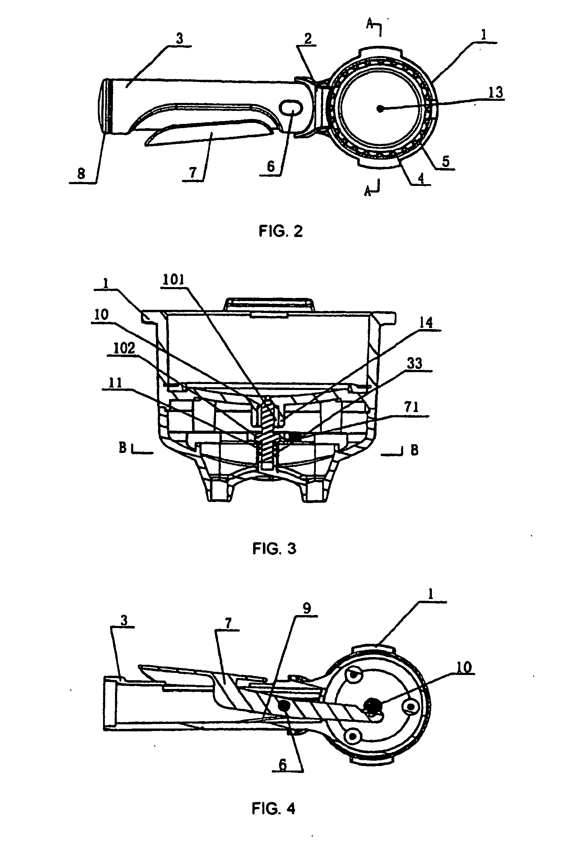

As shown in Figure 1 and Figure 2, one embodiment of a coffee filter in accordance with the present invention includes generally, among other components, a coffee filter basket 12, a filter bowl 1, a bowl clamp 2, a handle 3, a spring washer 4, a seal ring 5, a fixed axle 6, a drive rod 7, a return spring 11, a control valve needle 10, and a pressure spring 9.

Spring washer 4 and seal ring 5 are placed in the circular groove in the base of filter bowl 1. Filter bowl 1 has a compass bottom with valve opening 13 in the middle. On the lower surface of the filter bowl disposed below valve opening 13, is an upper valve seat 14 of a hollow column shape for fixing valve needle 10. The upper valve seat 14 has larger inner diameter than the valve opening 13. In their sealing interface, namely, the in the lower aperture of valve opening 13, there is a transitional hollow cone.

Handle 3 comprises a handle lever 31 and a tray 32 that is fixed onto the bottom of the filter bowl 1. Handle lever 31 is hollow tubular shaped, and its end is sealed with an end cap 8. Bowl tray 32 of handle 3 is fixed with filter bowl 1 by virtue of a filter bowl clamp 2. The tray is provided with lower valve seat 33 in the middle corresponding to the position of valve opening 13.

As shown in Figure 3, a valve needle 10 is installed below valve opening 13 between the lower valve seat 33 and the upper valve seat 14. A cone-shaped top of valve needle 10 matches the shape of the lower aperture of valve opening 13, and they fit tightly to seal valve opening 13. Its circumference is "cross" diamond shaped (4 vertical groove 101). Valve needle 10 has a flange 102 in the middle, and a ring groove is formed between the flange 102 and the upper body of the valve needle. The valve needle body below flange 102 is sleeved with a return spring 11. One end of the return spring 11 butts against valve needle flange 102, and the other end butts against the center of the bottom of tray 32 of handle 3. By this way, the return spring 11 exerts an upward force against the valve needle 10, which makes its top butt against the lower aperture of valve opening 13.

As shown in Figure 4, drive rod 7 is fitted inside handle 3 by a fixed axle 6, and it can rotate around the axle 6. A mounting hole 73 in the middle of the drive rod 7 accommodates fixed axle 6. Drive rod 7 pivots about mounting hole 73. One side is the application end, and the other side is the hand drive end. The application end is provided with seizing notch 71 that seizes the valve needle. The notch opening has an angular structure. The hand drive end is provided with curved press grip 74 that matches the shape of handle 3, which is convenient to use. The flange 102 of the valve needle 10 is located in the travel path of the seizing notch 71 of the drive rod (refer to Figure 3 and Figure 4). Due to the angular structure of the notch opening, when the notch 71 moves toward the valve needle and contacts with flange 102, the flange 102 moves downwards along the slope. As a result, the whole valve needle 10 is driven to overcome the applied force of return spring 11 and moves downwards, so that its top leaves the valve opening 13. In addition, there is a slot 72 in the drive rod 7 for fixing the pressure spring 9. The other end of the pressure spring 72 butts against the inner wall of handle 3, so that a fixed included angle between drive rod 7 and handle 3 is formed.

In use, the proper amount of coffee is added in coffee filter basket 12, which then is placed onto filter bowl 1, and then the coffee filter is wholly mounted in the coffee machine. Now valve needle 10 is in the state of blocking valve opening 13 under the force of the return spring 11. In the beginning of coffee making, coffee juice accumulates continuously in the filter bowl 1. When the steam pressure is high enough, the valve needle is pressed down, and a gap between the cone top of valve needle 10 and valve opening 13 is formed. Under the steam pressure, the coffee juice goes through the small gap of 0.2±0.03mm between the valve opening and the valve needle. It then releases suddenly when flowing through the bigger gap path formed between vertical groove 101 of valve needle 10 and the hollow column of upper valve seat 14, thereby producing a significant amount of coffee foam.

After the coffee is served out, to take out the filter, the handle 3 is held, and drive rod 7 is naturally grasped together with the handle 3. Now seizing notch 71 of the drive rod 7 seizes the valve needle 10 and makes it move down and separate from the valve opening 13, which discharges dregs and residual vapor in filter bowl 1. This ensures the users' safety.

For cleaning, the drive rod 7 and the handle 3 are also held tightly together, so that the largest gap is reached between valve needle 10 and valve opening 13. Now it very convenient and easy to flush the filter and completely move dregs with greatly increased handling efficiency.

## Claims

1. A coffee filter comprising:
a filter bowl having a valve opening;
a control valve disposed below the valve opening and having a valve needle with a top and a return spring biasing said valve needle so that said top is urged toward said valve opening; and
a handle extending from said filter bowl and a drive rod pivoted to the handle and pivotal to exert a force on the valve needle wherein the top is displaced from the valve opening.

2. The coffee filter of claim 1 wherein the drive rod has an application end which has a seizing notch for seizing the valve needle.

3. The coffee filter of claim 2 wherein the notch is defined by an angular structure.

4. The coffee filter of claim 2 wherein the valve needle has a flange and said flange is disposed in the travel path of the seizing notch.

5. The coffee filter of claim 4 wherein the filter bowl has a lower surface defining an upper valve seat disposed below the lower aperture of the valve opening and the handle has a tray having a lower valve seat positioned to align with the valve opening wherein the valve needle is installed between the upper valve and the lower valve seat for axial movement.

6. The coffee filter of claim 1 wherein the drive rod is fitted inside the handle by a fixed axle for rotation about the axle.

7. The coffee filter of claim 6 further comprising a pressure spring disposed between the handle and the drive rod to form an included angle between the drive rod and the handle.

8. The coffee filter of claim 5 wherein the top of the valve needle is cone shaped and is complementary with the lower aperture of the valve opening.

9. The coffee filter of claim 8 further comprising a vertical groove on the circumference of the valve needle.

10. The coffee filter of claim 6 wherein the drive rod has a hand drive end and a curved press grip matches the shape of the handle.

11. The coffee filter of claim 8 wherein a gap is disposed between the valve needle and the lower aperture of the valve opening and said gap is 0.2±0.03mm.

## Patentansprüche

1. Kaffeefilter enthaltend :
eine Filterglocke mit einer Ventilöffnung ;
ein unterhalb der Ventilöffnung angeordnetes Steuerventil enthaltend eine Ventilnadel mit einem Oberteil und eine die Ventilnadel vorspannende Rückstellfeder, so dass das Oberteil auf die Ventilöffnung gezwungen wird; und einen Handgriff, der sich aus die Filterglocke erstreckt und
einen zum Handgriff geschwenken Antriebsstab, der schwenkbar ist um eine Kraft auf die Ventilnadel auszuüben, wobei das Oberteil aus die Ventilöffnung bewegt wird.

2. Kaffeefilter nach Anspruch 1, wobei der Antriebsstab ein Verwendungende aufweist, die eine greifende Kerbe zum Greifen der Ventilnadel aufweist.

3. Kaffeefilter nach Anspruch 2, wobei die Kerbe von eine eckige Struktur definiert wird.

4. Kaffeefilter nach Anspruch 2, wobei die Ventilnadel einen Flansch auwfeist und der Flansch im Fahrweg der greifende Kerbe angeordnet ist.

5. Kaffeefilter nach Anspruch 4, wobei die Filterglocke eine untere Fläche aufweist, die einen unterhalb der untere Öffnung der Ventilöffnung angeordneten Ventilsitz definiert und der Handgriff ein Tablett aufweist, das einen unteren Ventilsitz aufweist, der eingelagert ist um mit der Ventilöffnung auszurichten, wobei die Ventilnadel zwischen dem oberen und dem unteren Ventilsitz zu einer Axialbewegung installiert wird.

6. Kaffeefilter nach Anspruch 1, wobei der Antriebsstab innerhalb dem Handgriff durch eine feststehende Achse zur Undrehung um der Achse eingefügt wird.

7. Kaffeefilter nach Anspruch 6, weiter umfassend eine Druckfeder, die zwischen dem Handgriff und dem Antriebsstab angeordnet ist um einen Winkel zwischen dem Antriebsstab und dem Handgriff einzuschließen.

8. Kaffeefilter nach Anspruch 5, wobei das Oberteil der Ventilnadel kegelförmig ist und komplementär zu der unteren Öffnung der Ventilöffnung ist.

9. Kaffeefilter nach Anspruch 8 weiter enthaltend eine vertikale Nut am Umfang des Ventilnadels.

10. Kaffeefilter nach Anspruch 6, wobei der Antriebsstab ein Handantriebende hat und ein gekrümmter Druckgriff der Form des Handgriffs entspricht.

11. Kaffeefilter nach Anspruch 8, wobei ein Abstand zwischen der Ventilnadel und der untere Öffnung der Ventilöffnung angeordnet ist und dieser Abstand 0.2 ± 0.03mm ist.

## Revendications

1. Filtre à café comprenant :
une cuve de filtre ayant une ouverture de soupape ;
une soupape de commande disposée sous l'ouverture de soupape et ayant un pointeau de soupape avec une partie supérieure et un ressort de rappel sollicitant ledit pointeau de soupape de telle sorte que ladite partie supérieure est solicitée vers ladite ouverture de soupape ; et
une poignée s'étendant à partir de ladite cuve de filtre et une tige d'entraînement montée à pivotement sur la poignée et apte à pivoter pour exercer une force sur le pointeau de soupape, la partie supérieure étant déplacée à partir de l'ouverture de soupape.

2. Filtre à café selon la revendication 1, dans lequel la tige d'entraînement a une extrémité d'application qui a une encoche de saisie pour saisir le pointeau de soupape.

3. Filtre à café selon la revendication 2, dans lequel l'encoche est définie par une structure angulaire.

4. Filtre à café selon la revendication 2, dans lequel le pointeau de soupape a une bride et ladite bride est disposée dans le trajet de déplacement de l'encoche de saisie.

5. Filtre à café selon la revendication 4, dans lequel la cuve de filtre a une surface inférieure définissant un siège de soupape supérieur disposé au-dessous de l'ouverture inférieure de l'ouverture de soupape et la poignée a un plateau ayant un siège de soupape inférieur positionné de façon à s'aligner avec l'ouverture de soupape, le pointeau de soupape étant installé entre le siège de soupape supérieur et le siège de soupape inférieur pour un mouvement axial.

6. Filtre à café selon la revendication 1, dans lequel la tige d'entraînement s'ajuste à l'intérieur de la poignée par un axe fixe en vue d'une rotation autour de l'axe.

7. Filtre à café selon la revendication 6, comprenant en outre un ressort de pression disposé entre la poignée et la tige d'entraînement pour former un angle inclus entre la tige d'entraînement et la poignée.

8. Filtre à café selon la revendication 5, dans lequel la partie supérieure du pointeau de soupape est en forme de cône et est complémentaire avec l'ouverture inférieure de l'ouverture de soupape.

9. Filtre à café selon la revendication 8, comprenant en outre une rainure verticale sur la circonférence du pointeau de soupape.

10. Filtre à café selon la revendication 6, dans lequel la tige d'entraînement a une extrémité d'entraînement manuel, un élément de saisie à pression incurvé correspondant à la forme de la poignée.

11. Filtre à café selon la revendication 8, dans lequel un espacement est prévu entre le pointeau de soupape et l'ouverture inférieure de l'ouverture de soupape et ledit espacement est de 0,2±0,03 mm.
